# EUROPÄISCHE PATENTSCHRIFT

(11) **EP 0 444 012 B1**
(45) Veröffentlichungstag und Bekanntmachung des Hinweises auf die Patenterteilung: **02.11.1995**
(21) Anmeldenummer: 91890027.5
(22) Anmeldetag: 18.02.1991
(51) Int. Cl.: G03B 19/18

(54) **Gehäuse für eine Filmkamera**
Filmcamera body
Boîtier de caméra cinématographique

(30) Priorität: 20.02.1990 AT 386/90
(43) Veröffentlichungstag der Anmeldung: 28.08.1991
(73) Patentinhaber: Bauer, Fritz, A-3002 Purkersdorf (AT)
(72) Erfinder: Bauer, Fritz, A-3002 Purkersdorf (AT)
(74) Vertreter: Gibler, Ferdinand, Dipl.Ing. Dr. techn.

(56) Entgegenhaltungen:
- DE-A- 2 200 534
- US-A- 4 082 436
- US-A- 4 298 255
- US-A- 4 630 907

## Beschreibung

Die Erfindung bezieht sich auf ein Filmkamerasystem mit einem Gehäuse und einem Filmmagazin, welches in einer ersten Stellung im wesentlichen oberhalb des Gehäuses und in einer zweiten Stellung im wesentlichen hinter dem Gehäuse fixierbar ist, wobei das Gehäuse eine einzige Öffnung zur Durchführung des Films sowie eine Einsteckhalterung zur Aufnahme von im wesentlichen gegengleich geformten Ansätzen des Filmmagazins und eine Verriegelung für dieses aufweist, und wobei die Öffnung zur Durchführung des Filmes durch einen Aufnahmeteil teilweise abdeckbar ist sowie das Filmmagazin auf dem Aufnahmeteil fixierbar ist.

Die US-A-4 630 907 zeigt eine Vorrichtung zur schwenkbaren Befestigung eines Filmmagazins an einer Filmkamera, mit welcher das Filmmagazin von einer Stellung oberhalb der Kamera in eine Stellung hinter der Kamera gleitend verdreht werden kann. Das Filmmagazin ist auf einem Träger mittels Befestigungsmitteln angebracht, welcher Träger mit einer gekrümmten Schiene versehen ist, an die eine flexible Lichtabdeckung anschließt. Der Träger ist mit seiner gekrümmten Schiene wiederum auf einer ebenso gekrümmten Gehäuseschiene lösbar befestigt, sodaß durch eine Öffnung im Träger und eine Öffnung im Kameragehäuse, die vom oberen Teil des Gehäuses bis zu dessen hinterem Ende reicht, der Film in jeder beliebigen Stellung zwischen den beiden Endstellungen des Filmmagazins hindurchgeführt werden kann. Der Träger mit dem Filmmagazin kann dabei in der gewünschten Stellung mit einem über einen Hebel betätigbaren Bremsschuh fixiert werden. Durch die flexible Lichtabdeckung wird in allen möglichen Stellungen des Filmmagazins der restliche Teil der Gehäuseöffnung lichtdicht abgedeckt.

Ein derartiges Gehäuse wurde weiters durch die US-A 4 082 436 bekannt. Bei diesem bekannten Gehäuse sind zwei Öffnungen zur Durchführung des Films vorgesehen, von denen eine an der Rückwand des Gehäuses und die andere an der Oberseite desselben angeordnet sind. Im Bereich der beiden Öffnungen sind Einsteckhalterungen angeordnet, die zur wahlweisen Aufnahme eines Filmmagazins dienen.

Dabei ergibt sich jedoch der Nachteil, daß die jeweils nicht zur Aufnahme des Magazins verwendete Öffnung mit einem Deckel verschlossen werden muß und der Aufwand für Licht-, Schmutz- und Schalldichtheit entsprechend ist.

Ziel der Erfindung ist es, diese Nachteile zu vermeiden und ein Gehäuse der eingangs erwähnten Art vorzuschlagen, das sich durch einen einfachen Aufbau auszeichnet.

Erfindungsgemäß wird dies dadurch erreicht, daß ein erster sowie ein zweiter an das Gehäuse angepaßter Aufnahmeteil vorgesehen ist, wobei das Gehäuse und das Filmmagazin in der oberen Stellung mit dem ersten Aufnahmeteil und in der hinteren Stellung mit dem zweiten Aufnahmeteil verbindbar sind.

Auf diese Weise ergibt sich ein sehr einfacher Aufbau, wobei ein Wechsel des Aufsteckortes des Filmmagazins an dem Gehäuse sehr einfach möglich ist.

Die Einbauten des Gehäuses können beliebig ausgebildet sein und sind an sich nicht Gegenstand der Erfindung. So können die Einbauten des Gehäuses z.B. gemäß den US-PSen 4 536 066, 4 402 581, 4 320 942 und 4 218 116 ausgebildet sein.

Dabei kann weiters vorgesehen sein, daß zur Fixierung der Aufnahmeteile eine in eine Gewindebohrung des Gehäuses einsetzbare Schraube vorgesehen ist.

Damit wird eine sehr sichere Verankerung des Aufsteckteiles errreicht, wobei auch eine Einleitung von Kräften über diese Verbindung in das Gehäuse möglich ist.

Nach einem weiteren Merkmal der Erfindung kann vorgesehen sein, daß einer der Aufnahmeteile im wesentlichen als Winkelstück ausgebildet ist, dessen Schenkel einen Winkel einschließen, der jenem zwischen der Rückwand des Gehäuses und dessen Oberseite entspricht, wobei der eine Schenkel Paßflächen aufweist, die mit Paßflächen des Gehäuses zusammenwirken und der Schenkel des Aufnahmeteiles in die Öffnung des Gehäuses einsetzbar ist und diese teilweise überdeckt.

Dadurch wird einerseits ein entsprechender Bereich der Öffnung des Gehäuses freigehalten, um eine Durchführung des Films zu ermöglichen und anderseits eine Abstützung des Filmmagazins eben an dem in der Öffnung des Gehäuses eingreifenden Abschnittes des Aufnahmeteiles sichergestellt ist. Dabei wird durch die Paßflächen in Verbindung mit der Befestigungsschraube eine Einleitung von Kräften in das Gehäuse möglich.

Nach einem weiteren Merkmal der Erfindung ist vorgesehen, daß einer der Aufnahmeteile im wesentlichen T-förmig ausgebildet ist, dessen mittlerer Steg mit seinem Querbalken einen Winkel einschließt, der jenem zwischen der Rückwand des Gehäuses und dessen Oberseite entspricht an seinem freien Ende eine Einsteckhalterung aufweist, wobei an dem Querbalken eine zur Aufnahme des Filmmagazins dienende Einsteckhalterung und eine Klemmeinrichtung für das Filmmagazin angeordnet sind, wobei der Aufnahmeteil einen Durchbruch zur Durchführung des Films aufweist.

Mit einem solchen Aufnahmeteil ist einerseits eine sichere Befestigung des Magazins sichergestellt, wobei ein solcher Aufnahmeteil die Einleitung der Kräfte in das Gehäuse ermöglicht.

Die Erfindung wird nun anhand der Zeichnung näher erläutert. Dabei zeigen:
Fig. 1 einen Schnitt durch ein Gehäuse mit an dessen Oberseite aufgestecktem Filmmagazin,
Fig. 2 eine Explosionsdarstellung eines Gehäuses mit einem Aufnahmeteil nach Fig. 1,
Fig. 3 einen Schnitt durch ein Gehäuse mit an dessen Rückseite aufgestecktem Filmmagazin und
Fig. 4 eine Explosionsdarstellung eines Gehäuses mit einem Aufnahmeteil nach Fig. 3.

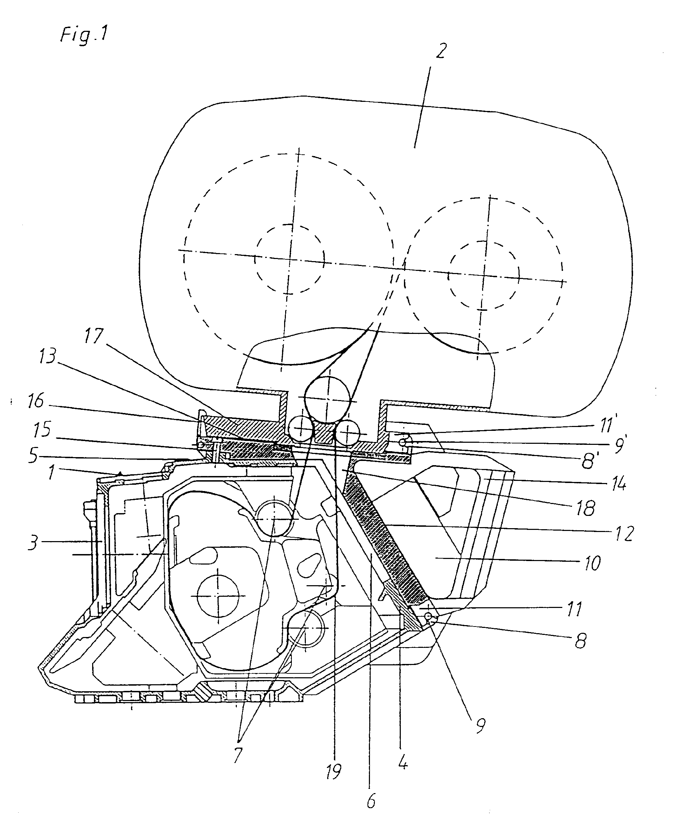

Fig. 1 zeigt ein erfindungsgemäßes Gehäuse 1 mit einem an dessen Oberseite aufgestecktem Filmmagazin 2. Dabei ist das Objektiv, das in die Aufnahme 3 einsetzbar ist, nicht dargestellt.

Das Gehäuse 1 weist im Bereich der Rückwand 4 eine Öffnung 6, die sich auch in den Bereich der oberen Wand 5 hineinerstreckt.

Im Inneren des Gehäuses sind die üblichen Einbauten, wie Filmführung 7 samt Antrieb, Greiferwerk u.s.w. untergebracht, die in üblicher Weise, z.B. gemäß den US-PSen 4 536 066, 4 402 581, 4 320 942 und 4 218 116 ausgebildet sein können und an sich nicht Bestandteil der Erfindung sind.

Im unteren Bereich der Rückwand 4 des Gehäuses 1 ist eine Einsteckhalterung in Form einer zwischen zwei Laschen 8 gehaltenen Achse 9 angeordnet, auf die ein Aufnahmeteil 10 mit im wesentlichen gegengleich geformten Ansätzen 11 aufgesteckt ist.

Dieser Aufnahmeteil 10 ist im wesentlichen T-förmig ausgebildet, wobei der mittlere Steg 12 mit dem Querbalken 13 einen Winkel einschließt, der jenem zwischen der Rückwand 4 und der oberen Wand 5 entspricht. Dabei überdeckt der mittlere Steg 12 den größten Teil der Öffnung 6. An diesem Steg 12 ist weiters eine Handhabe 14 angeformt.

Der Quersteg 13 des Aufnahmeteiles 10 liegt mit seinem der Objektivaufnahme 3 zugekehrten Bereich auf der oberen Wand 5 des Gehäuses auf und ist an dieser mittels einer Schraube 15 fixiert.

An dem einen Ende des Querbalkens 13 ist eine Achse 9′ zwischen an dem Quersteg 13 angeformten Laschen 8′ gehalten, die als Einsteckhalterung für das Filmmagazin 2 dient. Am zweiten Endes des Querbalkens 13 ist ein Klemmhaken 16 um eine an dem Querbalken 13 gehaltenen Achse schwenkbar gehalten, mit dem das Filmmagazin 2 festklemmbar ist.

Das Filmmagazin 2 ist mit Ansätzen 11′ versehen, die im wesentlichen gegengleich zur Einsteckhalterung des Aufnahmeteiles 10 ausgebildet sind. Weiters ist das Filmmagazin 2 mit einer Klemmplatte 17 versehen, an dessen Oberseite der Klemmhaken 16 angreift.

Im Verbindungsbereich des mittleren Steges 12 mit dem Querbalken 13 weist der Aufnahmeteil 10 einen Durchbruch 18 auf, der zur Durchführung des Films 19 dient.

Der Aufnahmeteil 10 deckt die Öffnung 6 des Gehäuses 1 zu einem großen Teil ab.

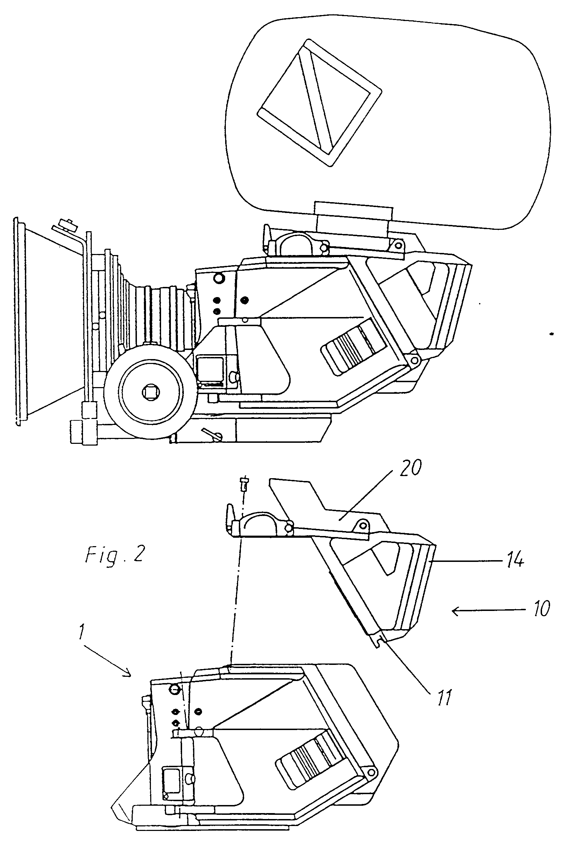

Fig. 2 zeigt den Aufnahmeteil 10 im vom Gehäuse 1 abgehobenen Zustand. Dabei ist auch zu ersehen, daß der Aufnahmeteil 10 eine Abstützung 20 für das Filmmagazin 2, das wie aus der Fig. 1 zu ersehen ist, in üblicher Weise mit Führungsrollen für den Film 19 versehen ist, aufweist.

Beim Aufnahmeteil 10 weist der an der oberen Wand 5 des Gehäuses 1 aufliegende Schenkel 13 senkrecht, bzw. schräg verlaufende Paßflächen 25, 26 auf, die mit gegengleich ausgebildeten Paßflächen des Gehäuses 1 zusammenwirken, wodurch sich eine sehr sichere Abstützung des Aufnahmeteiles an dem Gehäuse 1 ergibt und eine sichere Einleitung von Kräften in das Gehäuse ermöglicht wird.

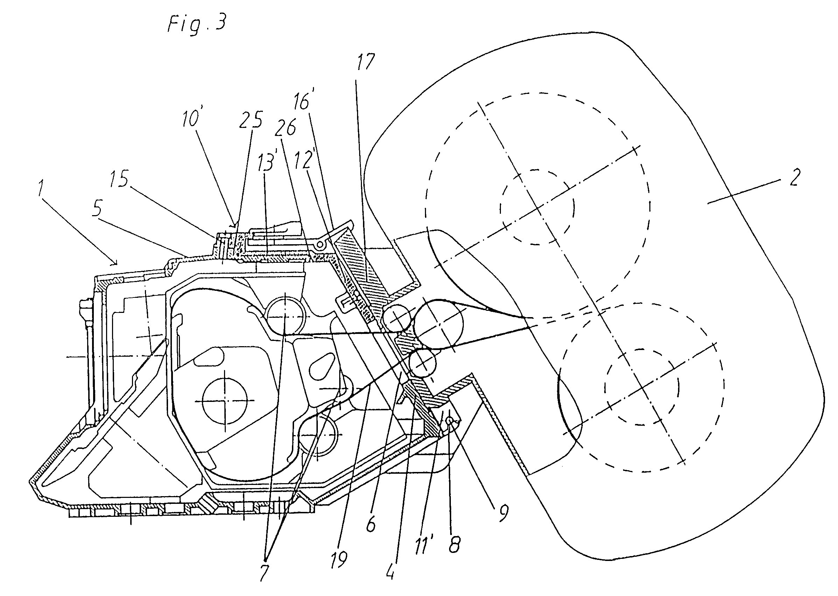

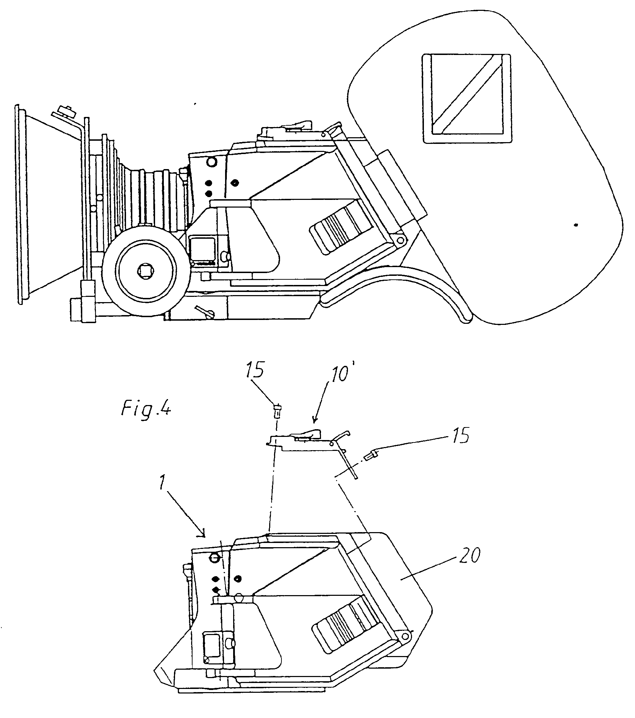

In Fig. 3 ist das gleiche Gehäuse 1 wie in der Fig. 1 dargestellt, wobei jedoch ein Aufnahmeteil 10′ an dem Gehäuse 1 montiert ist. Dieses ist, wie aus der Fig. 4 zu ersehen ist, mittels zweier Schrauben 15 an dem Gehäuse 1 festlegbar.

Der Aufnahmeteil 10′ weist zwei Schenkel 12′, 13′ auf, die einen Winkel einschließen, der jenem zwischen der Rückwand 4 und der oberen Wand 5 entspricht. Dabei greift der Schenkel 12′ in die Öffnung 6 des Gehäuses 1 ein und deckt diese teilweise ab.

Das Filmmagazin 2 ist dabei mit dem Ansatz 11′ in der Einsteckhalterung des Gehäuses 1, die durch die Achse 9 gebildet ist, eingehakt und mittels des Klemmhakens 16′, der an dem Aufnahmeteil 10′ gehalten ist, fixiert.

Der Film 19 ist dabei über die gleichen Rollen der Filmführung geführt, wie bei dem an der oberen Wand 5 des Gehäuses 1 angeordneten Filmmagazin 2.

Wie aus der Fig. 4 zu ersehen ist, ist auch an dem Aufnahmeteil 10′ eine Stütze 20′ angeformt.

## Patentansprüche

1. Filmkamerasystem mit einem Gehäuse (1) und einem Filmmagazin (2), welches in einer ersten Stellung im wesentlichen oberhalb des Gehäuses (1) und in einer zweiten Stellung im wesentlichen hinter dem Gehäuse (1) fixierbar ist, wobei das Gehäuse (1) eine einzige Öffnung (6) zur Durchführung des Films (19) sowie eine Einsteckhalterung zur Aufnahme von im wesentlichen gegengleich geformten Ansätzen (11) des Filmmagazins (2) und eine Verriegelung für dieses aufweist, und wobei die Öffnung (6) zur Durchführung des Filmes (19) durch einen Aufnahmeteil (10, 10′) teilweise abdeckbar ist sowie das Filmmagazin (2) auf dem Aufnahmeteil (10, 10′) fixierbar ist, **dadurch gekennzeichnet,** daß ein erster sowie ein zweiter an das Gehäuse (1) angepaßter Aufnahmeteil (10, 10′) vorgesehen ist, wobei das Gehäuse (1) und das Filmmagazin (2) in der oberen Stellung mit dem ersten Aufnahmeteil (10) und in der hinteren Stellung mit dem zweiten Aufnahmeteil (10′) verbindbar sind.

2. Gehäuse nach Anspruch 1, **dadurch gekennzeichnet**, daß zur Fixierung der Aufnahmeteile (10, 10′) eine in eine Gewindebohrung des Gehäuses (1) einsetzbare Schraube (15) vorgesehen ist.

3. Gehäuse nach Anspruch 1 oder 2, **dadurch gekennzeichnet,** daß der zweite Aufnahmeteil (10′) im wesentlichen als Winkelstück ausgebildet ist, dessen Schenkel (12′, 13′) einen Winkel einschließen, der jenem zwischen der Rückwand (4) des Gehäuses (1) und dessen oberer Wand (5) entspricht, wobei der eine Schenkel (13′) Paßflächen (25, 26) aufweist, die mit Paßflächen des Gehäuses (1) zusammenwirken und der andere Schenkel (12′) des Aufnahmeteiles (10′) in die Öffnung (6) des Gehäuses einsetzbar ist und diese teilweise überdeckt.

4. Gehäuse nach einem der Ansprüche 1 bis 3, **dadurch gekennzeichnet,** daß der erste Aufnahmeteil (10) im wesentlichen T-förmig ausgebildet ist, dessen mittlerer Steg (12) mit seinem Querbalken (13) einen Winkel einschließt, der jenem zwischen der Rückwand des Gehäuses (1) und dessen oberer Wand (5) entspricht an seinem freien Ende eine Einsteckhalterung aufweist, wobei an dem Querbalken (13) eine zur Aufnahme des Filmmagazins (2) dienende Einsteckhalterung und eine Klemmeinrichtung für das Filmmagazin (2) angeordnet sind, wobei der Aufnahmeteil einen Durchbruch (18) zur Durchführung des Films (19) aufweist.

## Claims

1. Film camera system having a housing (1) and a film magazine (2) which can be fixed in a first setting essentially above the housing (1) and in a second setting essentially behind the housing (1), the housing (1) exhibiting a single opening (6) for guiding through the film (19) as well as a plug-in mounting for the reception of essentially identically opposite shaped protrusions (11) of the film magazine (2) and a locking device for the said film magazine, and the opening (6) for guiding through the film (19) being able to be partially covered by a receiving part (10, 10′) and the film magazine (2) being able to be fixed on the receiving part (10, 10′), characterized in that a first and a second receiving part (10, 10′) matched to the housing (1) is provided, the housing (1) and the film magazine (2) being connectable in the upper setting to the first receiving part (10) and in the rear setting to the second receiving part (10′).

2. Housing according to Claim 1, characterized in that for the fixing of the receiving parts (10, 10′) a screw (15) is provided, which is insertable into a threaded bore of the housing (1).

3. Housing according to Claim 1 or 2, characterized in that the second receiving part (10′) is essentially configured as an angled piece, the arms (12′, 13′) of which enclose an angle corresponding to that between the rear wall (4) of the housing (1) and its upper wall (5), the one arm (13′) exhibiting mating surfaces (25, 26), which interact with mating surfaces of the housing (1), and the other arm (12′) of the receiving part (10′) being insertable into the opening (6) of the housing and partially covering the said opening.

4. Housing according to one of Claims 1 to 3, characterized in that the first receiving part (10) is of essentially T-shaped configuration, the middle bar (12) of which forms with its traverse (13) an angle corresponding to that between the rear wall of the housing (1) and its upper wall (5) and exhibits at its free end a plug-in mounting, whilst on the traverse (13) there are disposed a plug-in mounting serving to receive the film magazine (2) and a clamping device for the film magazine (2), the receiving part exhibiting an aperture (18) for guiding the film (19).

## Revendications

1. Système de caméra à film, avec carter (1) et magasin à film (2), qui peut être fixé dans une première position sensiblement au-dessus du carter (1) et dans une deuxième position sensiblement derrière le carter (1), le carter (1) présentant une ouverture (6) unique pour permettre le passage du film (16) ainsi qu'une fixation à enfichage, pour recevoir des appendices (11) à formes pratiquement complémentaires, du magasin à film (2) et un verrouillage pour celui-ci et l'ouverture (6) destinée au passage du film (19) pouvant être recouverte en partie par une partie réceptrice (10, 10′), le magasin à film pouvant également être fixé sur la partie réceptrice (10, 10′), caractérisé en ce qu'est prévue une première ainsi qu'une deuxième partie réceptrice (10, 10′) adaptées au carter (1), le carter (1) et le magasin à film (2) pouvant être reliés dans la position supérieure à la première partie réceptrice (10) et dans la position arrière à la deuxième partie réceptrice (10′).

2. Carter selon la revendication 1, caractérisé en ce qu'une vis (15) pouvant être insérée dans un trou taraudé du carter (1) est prévue pour assurer la fixation des parties réceptrices (10, 10′).

3. Carter selon la revendication 1 ou 2, caractérisé en ce que la deuxième partie réceptrice (10′) est réalisée sensiblement sous forme de pièce de cornière, dont les branches (12′, 13′) font un angle qui correspond à celui fait entre la paroi arrière (4) du carter (1) et sa paroi supérieure (5), une branche (13′) présentant des faces d'adaptation (25, 26), coopérant avec des faces d'adaptation du carter (1) et l'autre branche (12′) de la partie réceptrice (10′) pouvant être insérée dans l'ouverture (6) du carter et recouvrir celle-ci partiellement.

4. Carter selon l'une des revendications 1 à 3, caractérisé en ce que la première partie réceptrice (10) est sensiblement en forme de T, dont la barre médiane (12) fait avec la barre transversale (13) un angle qui correspond à celui fait entre la paroi arrière du carter (1) et sa paroi supérieure (5) et présente à son extrémité libre une fixation à enfichage, une fixation à enfichage servant à recevoir le magasin à film (2) et un dispositif de serrage destiné au magasin à film (2), étant disposés sur la barre transversale (13), la partie réceptrice présentant un passage (18) destiné à laisser passer le film (19).
